# EUROPÄISCHE PATENTANMELDUNG

(11) **EP 4 098 440 A1**
(43) Veröffentlichungstag der Anmeldung: **07.12.2022**
(21) Anmeldenummer: 22172340.6
(22) Anmeldetag: 09.05.2022
(51) Int. Cl.: B32B 25/10, D06N 3/04, F17B 1/02

(54) **GASSPEICHERMEMBRAN, INSBESONDERE FÜR WASSERSTOFFGASSPEICHER**

(30) Priorität: 31.05.2021 DE 102021205540
(71) Anmelder: ContiTech Elastomer-Beschichtungen GmbH, 30165 Hannover (DE)
(72) Erfinder: Overkamp, Andre, 30165 Hannover (DE); Engelhardt, Oliver, 30165 Hannover (DE); Fennel, Heike, 30165 Hannover (DE); Dr. Storre, Jens, 30165 Hannover (DE); Weber, Thomas, 30165 Hannover (DE)
(74) Vertreter: Continental Corporation

(57) **Zusammenfassung**

Es wird die Verwendung einer Gasspeichermembran zum Abdichten eines Gasspeichers, insbesondere eines Wasserstoffgasspeichers, beschrieben, wobei die Gasspeichermembran eine Lage aus einem textilen Flächenkörper als Festigkeitsträger und mindestens eine Elastomerlage aufweist, wobei die Elastomerlage aus Butylkautschuk, Chloropren-Kautschuk oder Nitrilkautschuk aufgebaut ist, mit der Maßgabe, dass, wenn die mindestens eine Elastomerlage aus Chloropren-Kautschuk oder Nitrilkautschuk aufgebaut ist und der Gasspeicher kein Wasserstoffgasspeicher ist, die Gasspeichermembran eine zusätzliche Barrieresperre umfasst.

## Beschreibung

Die Erfindung betrifft die Verwendung einer Gasspeichermembran zum Abdichten eines Gasspeichers, insbesondere eines Wasserstoffgasspeichers, sowie die Gasspeichermembran und einen die Gasspeichermembran umfassenden Gasspeicher.

Wasserstoff kann der Energieträger der Zukunft sein. So planen selbst Stahlhersteller Stahl mithilfe von "grünen" Wasserstoff herzustellen. Hierzu werden große Mengen Wasserstoff benötigt. Grüner Wasserstoff wird mit Hilfe von erneuerbaren Energien hergestellt. Dieser wird heute in Stahlflaschen gelagert und zu den Abnehmern transportiert. Bei großen Abnehmern, wie z.B. Stahlwerken, ist dieses Verfahren sehr aufwendig.

Grüner Wasserstoff soll z.B. durch Windenergie direkt beim Großverbraucher produziert werden. Hier wird dieser sofort verbraucht, kleine Mengen in Gasflaschen zwischengespeichert. Bei Windstille muss Wasserstoff zugeliefert werden. Dafür wird für Produktion des Wasserstoffes und den Transport CO₂ freigesetzt. Bei der Stahlherstellung werden schon heute Prozessgase zwischengespeichert und wenn benötigt, dem Herstellungsprozess wieder zugeführt. Hierfür existieren schon sogenannte Gasspeicher (Gasometer), die ein sehr großes Gasvolumen zwischenspeichern können.

Bei Gasspeichern ist es natürlich unabdingbar, ein Entweichen der Gase soweit wie möglich zu verhindern, was insbesondere für Wasserstoff ein Problem darstellen kann.

Beispielsweise beschreibt die DE 102005023036 A1 einen Wasserstoffspeicher, der einen wasserstoffdichten Hochdrucktank, Kühlvorrichtungen und physikalisch adsorbierende Materialien erfordert. Ein solch aufwendiges System ist für große Anlagen nicht wirtschaftlich.

Heutzutage werden häufig Gasspeicher mit Membrandichtungen eingesetzt. Bei Gasspeichern vom Wiggins-Typ werden beschichtete Gewebe als Dichtmembranen eingesetzt. Dabei wird häufig PVC als Barrierematerial eingesetzt. Zum Speichern von Wasserstoffgas sollten die Membranen natürlich besonders gute Barriereeigenschaften gegen Wasserstoff aufweisen, damit möglichst wenig Wasserstoff durch die Membran entweicht. Die Barriereeigenschaften der heutigen Membranen reichen aber nicht aus, um einen Wiggins-Gasometer als Wasserstoffspeicher sicher zu betreiben.

Die Aufgabe der Erfindung bestand somit in der Bereitstellung von Speichermembranen, die für die Speicherung von Wasserstoffgas in Gasspeichern mit Membrandichtungen, eine gute Barrierewirkung aufweisen, um eine ausreichende Abdichtung zu ermöglichen, so dass ein Entweichen von Wasserstoff so weit wie möglich vermieden wird. Die Membranen sollen auch mit hoher Festigkeit und guter Dehnbarkeit ausgebildet werden können, die auch hohen Anforderungen bei bestimmten Anwendungen genügen.

Die Erfinder haben festgestellt, dass mit Butylkautschuk beschichtete Textilien, wie z.B. ein Gewebe, eine deutliche Verringerung der Wasserstoffdiffusion erreichen können. Eine zusätzliche Verbesserung kann durch Einbau einer Ethylen-Vinylalkohol-Copolymer (EVOH)-Barriere erreicht werden. Als Beschichtungselastomere komme auch Chloropren-Kautschuk (CR) oder Nitrilkautschuk (NBR) in Frage, insbesondere in Verbindung mit der EVOH-Barriere.

Die Aufgabe wurde somit durch die Verwendung einer Gasspeichermembran zum Abdichten eines Gasspeichers, insbesondere eines Wasserstoffgasspeichers, gelöst,
wobei die Gasspeichermembran eine Lage aus einem textilen Flächenkörper als Festigkeitsträger und mindestens eine Elastomerlage aufweist,
wobei die Elastomerlage aus Butylkautschuk (IIR), Chloropren-Kautschuk (CR) oder Nitrilkautschuk (NBR), bevorzugt IIR, aufgebaut ist,
mit der Maßgabe, dass, wenn die mindestens eine Elastomerlage aus CR oder NBR aufgebaut ist und der Gasspeicher kein Wasserstoffgasspeicher ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

Die erfindungsgemäß verwendeten Gasspeichermembranen zeigen eine ausgezeichnete Barrierewirkung gegenüber Wasserstoff. Im Vergleich zu herkömmlichen Membranen auf Basis von PVC ergibt sich eine um den Faktor 6 verringerte Wasserstoffdurchlässigkeit.

In den beigefügten Zeichnungen zeigt
- Fig. 1: einen schematischen Querschnitt durch eine erfindungsgemäße Speichermembran
- Fig. 2: einen schematischen Querschnitt durch eine andere erfindungsgemäße Speichermembran

Nachfolgend wird die Erfindung ausführlich erläutert.

Die Gasspeichermembran weist eine Lage aus einem textilen Flächenkörper als Festigkeitsträger und mindestens eine Elastomerlage auf.

Der textile Flächenkörper dient als Festigkeitsträger. Die Ausdrücke textiler Flächenkörper und Festigkeitsträger werden hier austauschbar verwendet. Die Gasspeichermembran weist einen textilen Flächenkörper auf. Er kann aber auch zusätzliche textile Flächenkörper enthalten, in der Regel ist aber ein textiler Flächenkörper als Festigkeitsträger ausreichend. Der textile Flächenkörper kann z.B. ein Gewebe, ein Gewirke, ein Gelege oder ein Vliesstoff sein, wobei ein Gewebe, ein Gewirke oder ein Gelege bevorzugt ist. Bei Anwendungen, in denen eine hohe Dehnbarkeit der Membran erforderlich ist, sind Gelege als textiler Flächenkörper bevorzugt. Bei bestimmten Wiggins-Gasspeichern ist es z.B. erforderlich, als Festigkeitsträger ein Gelege einzusetzen.

Der textile Flächenkörper bzw. die Garne oder Fasern, aus denen der textile Flächenkörper gebildet wird, können z.B. aus Polyamid, Polyester, wie aromatischen Polyestern, Aramid, Polysulfon, Baumwolle, Glas, Metall oder Kombinationen davon gebildet sein, wobei Polyamid (PA), Polysulfon (PES), Aramid, aromatische Polyester oder Kombinationen davon bevorzugt sind.

Ein Beispiel für einen zweckmäßigen aromatischen Polyester ist Vectran^{®}, ein Handelsprodukt von Kuraray, Japan, der aus der Umsetzung von 4-Hydroxybenzoesäure und 6-Hydroxynaphthalin-2-carbonsäure erhalten wird. Ein Beispiel für ein zweckmäßiges Aramid ist Technora^{®}, ein Handelsprodukt von Tejin Aramid, Niederland, das aus der Umsetzung von Terephthaloylchlorid (TCl) mit einer Mischung von p-Phenylenediamin (PPD) und 3,4'-Diaminodiphenylether (3,4'-ODA) erhalten wird.

Die Schichtdicke des textilen Flächenkörpers kann z.B. im Bereich von 0,1 bis 2 mm, bevorzugt 0,1 bis 1,5 mm liegen. Sofern der textile Flächenkörper ein Gelege, Gewebe oder Gewirke ist, die bevorzugt eingesetzt werden, beträgt die Schichtdicke z.B. 0,1 bis 0,5 mm, bevorzugt 0,2 bis 0,4 mm, während bei Vliesstoffen in der Regel höhere Schichtdicken verwendet werden müssen, z.B. 0,7 bis 2 mm, bevorzugt 0,9 bis 1,5 mm, weswegen ihr Einsatz weniger bevorzugt ist.

Die Gasspeichermembran weist ferner mindestens eine Elastomerlage auf, wobei die Elastomerlage aus Butylkautschuk (IIR), Chloropren-Kautschuk (CR) oder Nitrilkautschuk (NBR), aufgebaut ist, wobei die Elastomerlage bevorzugt aus IIR aufbaut ist, da IIR eine optimale Barrierewirkung bezüglich Wasserstoff zeigt. Im folgenden bezieht sich Elastomerlage immer auf eine Elastomerlage, die aus IIR (IIR-Elastomerlage), CR (CR-Elastomerlage) oder NBR (NBR-Elastomerlage) aufgebaut ist, sofern nicht anders angegeben.

Butylkautschuk wird auch als Isobuten-Isopren-Kautschuk bezeichnet und hat das Kurzzeichen IIR. Chloropren-Kautschuk wird auch als Polychloropren-Kautschuk oder Chlorbutadien-Kautschuk bezeichnet und hat das Kurzzeichen CR. Nitrilkautschuk wird auch als Acrylnitril-Butadien-Kautschuk bezeichnet und hat das Kurzzeichen NBR.

Der Ausdruck, dass die Elastomerlage aus Butylkautschuk (IIR), Chloropren-Kautschuk (CR) oder Nitrilkautschuk (NBR) aufgebaut ist, meint hier wie üblich eine Lage bzw. Schicht, dessen Matrix hauptsächlich aus dem jeweiligen vulkanisierten Kautschuk gebildet ist. Die Elastomerlage kann z.B. 60 bis 100 phr oder 80 bis 100, bevorzugt 90 bis 100 phr des jeweiligen Kautschuks, d.h. IIR, CR oder NBR, enthalten. Gewöhnlich wird im Wesentlichen der gesamte Anteil der Kautschukkomponente von dem jeweiligen Kautschuk gebildet. Die Angabe phr ist die in der Kautschukindustrie übliche Mengenangabe und bedeutet Gewichtsteile pro 100 Gewichtsteile der Gesamtmenge an in der Elastomerlage vorhandenem Kautschuk.

Zur Vulkanisation des Kautschuks können dem Fachmann bekannte Vernetzer oder Vernetzersysteme (Vernetzungsmittel und Beschleuniger) eingesetzt werden. Ferner kann die Elastomerlage ein oder mehrere Additive enthalten, die auf dem Gebiet üblich sind. Beispiele für übliche Additive sind Füllstoffe, Verarbeitungshilfsmittel, Weichmacher, Alterungsschutzmittel, Fasern oder Farbpigmente. Es wird diesbezüglich auf den allgemeinen Stand der Kautschukmischungstechnologie verwiesen. Elastomerplatten bzw. Elastomerplatten auf Basis von IIR, CR und NBR sind im Handel in vulkanisierter oder unvulkanisierter Form erhältlich und können als Ausgangsmaterial für die Elastomerlagen eingesetzt werden.

Bei Vorliegen von mehr als einer Elastomerlage können die Elastomerlagen aus dem gleichen Kautschuk oder einem unterschiedlichen Kautschuk aufgebaut sein. In der Regel werden aber Elastomerlagen aus dem gleichen Kautschuk verwendet. Die Schichtdicke der Elastomerlagen kann unabhängig voneinander z.B. 0,2 bis 1,3 mm, bevorzugt 0,4 bis 1,0 mm, betragen.

Der Festigkeitsträger der Gasspeichermembran kann auf einer Seite oder auf beiden Seiten mit jeweils mindestens einer Elastomerlage versehen sein. Es ist aber allgemein bevorzugt, dass auf jeder Seite des Festigkeitsträgers mindestens eine Elastomerlage angeordnet ist. In einer bevorzugten Ausführungsform umfasst die Gasspeichermembran somit mindestens zwei Elastomerlagen, wobei auf jeder Seite des Festigkeitsträgers mindestens eine Elastomerlage angeordnet ist.

Bei der bevorzugten Anordnung mit mindestens einer Elastomerlage auf jeder Seite des Festigkeitsträgers können auf jeder Seite des Festigkeitsträgers unabhängig voneinander ein, zwei oder mehr, bevorzugt ein oder zwei, Elastomerlagen vorgesehen sein. Der Einsatz von zwei Elastomerlagen auf einer Seite des Festigkeitsträgers kann z.B. zweckmäßig sein, um zwischen diesen beiden Elastomerlagen eine EVOH-Lage anzuordnen. Die beiden Elastomerlagen können dann gleiche oder unterschiedliche Dicken aufweisen. Wenn keine EVOH-Lage auf einer oder beiden Seite des Festigkeitsträgers vorhanden ist, kann eine Elastomerlage auf der Seite ohne Festigkeitsträger zu verwendet werden, es können aber auch auf dieser Seite zwei oder mehr Elastomerlagen vorhanden sein.

Bei einer Ausführungsform, bei der eine EVOH-Lage in der Gasspeichermembran vorhanden ist, können entsprechend auf einer Seite des Festigkeitsträgers zwei Elastomerlagen angeordnet sein, zwischen die die EVOH-Lage angeordnet ist, während auf der anderen Seite des Festigkeitsträgers eine, aber auch zwei oder mehr Elastomerlagen angeordnet ist bzw. sind. Die Dicken der Elastomerlagen können jeweils unterschiedlich sein.

Die Elastomerlagen können beispielsweise mit einem Tauch-, Streich- und/oder Kalanderprozess auf den Festigkeitsträger aufgebracht werden.

In der Regel ist es zweckmäßig, auf jeder Seite des Festigkeitsträger zwischen der oder den Elastomerlagen und dem Festigkeitsträger ein Haftsystem bzw. ein Klebmittel, insbesondere eine Haftgummierung, vorzusehen, um die Haftung zwischen der oder den Elastomerlagen und dem Festigkeitsträger zu verbessern.

Hierfür werden die zu verbindende Fläche des Festigkeitsträgers und/oder die zu verbindende Fläche der Elastomerlage mit dem Haftsystem bzw. der Haftgummierung behandelt. Ein Beispiel für übliche und geeignete Haftsysteme bzw. Haftgummierungen sind Zusammensetzungen, die Resorcin und Formaldehydspender enthalten. Denkbar ist es auch, ein solches Haftsystem in die Kautschukmischung für die Elastomerlage einzumischen (Direkthaftung). Alternativ oder zusätzlich können die zu verbindenden Flächen für eine bessere Haftung mit Haftvermittlern, Ätzmitteln oder durch Bestrahlung vorbehandelt werden. Der Fachmann auf diesem Gebiet ist mit geeigneten Haftsystemen bzw. Haftgummierungen vertraut.

In einer bevorzugten Ausführungsform kann die Membranschicht mittels einer zusätzlichen Barriere aus Ethylen-Vinylalkohol-Copolymer (EVOH) versehen werden. Auf diese Weise kann die Undurchlässigkeit gegenüber Gasen, insbesondere Wasserstoff, zusätzlich gesteigert werden. Zur Bildung einer solchen EVOH-Barriere in der Gasspeichermembran kann der Festigkeitsträger mit EVOH imprägniert werden und/oder die Gasspeichermembran kann mit einer EVOH-Lage versehen werden, die eine EVOH-Schicht oder einen mit EVOH imprägnierten textilen Flächenkörper umfasst.

Entsprechend ist in einer bevorzugten Ausführungsform der Festigkeitsträger mit Ethylen-Vinylalkohol-Copolymer (EVOH) imprägniert und/oder die Gasspeichermembran weist mindestens eine EVOH-Lage auf, die eine EVOH-Schicht oder einen mit EVOH imprägnierten textilen Flächenkörper umfasst, wobei diese Variante mit EVOH-Barriere sowohl bei IIR-Elastomerlagen, als auch bei CR-Elastomerlagen, als auch bei NBR-Elastomerlagen zweckmäßig ist. In der Regel ist es ausreichend, wenn entweder eine Imprägnierung mit EVOH oder der Einbau einer EVOH-Lage durchgeführt wird.

Wenn die mindestens eine Elastomerlage aus CR oder NBR aufgebaut ist und der Gasspeicher kein Wasserstoffgasspeicher ist, wird bei der erfindungsgemäßen Verwendung der Festigkeitsträger mit Ethylen-Vinylalkohol-Copolymer (EVOH) imprägniert oder die Gasspeichermembran weist mindestens eine EVOH-Lage auf.

Welche der beiden Varianten bevorzugt oder geeignet ist, hängt im Wesentlichen von der Art des Festigkeitsträgers ab. Wenn der Festigkeitsträger ein Gewebe oder ein Vliesstoff ist, ist es bevorzugt, den Festigkeitsträger mit EVOH zu imprägnieren. Dies ist ein einfaches und wirtschaftliches Verfahren. Wenn der Festigkeitsträger ein Gelege oder ein Gewirke ist, ist der Einbau einer EVOH-Lage bevorzugt, da eine zweckmäßige Imprägnierung oft nur schwer zu bewerkstelligen ist.

Der Festigkeitsträger, insbesondere ein Gewebe oder ein Vliesstoff, kann z.B. durch Tauchen des Festigkeitsträgers in EVOH-Lösungen erfolgen, wobei Beispiele von Lösungsmitteln Wasser, Alkohole oder Mischungen davon sind. Die Imprägnierung bildet eine zusätzliche Diffusionsbremse. Es ist nicht erforderlich, dass das EVOH in den ganzen Festigkeitsträger eindiffundiert, es sollten aber beide Seiten des Festigkeitsträgers mit einer Imprägnierung versehen sein.

Die EVOH-Lage kann prinzipiell einfach aus einer einschichtigen EVOH-Schicht bzw. EVOH-Folie gebildet sein. Zur besseren Anbindung an die Elastomere kann die EVOH-Schicht in einer mehrschichtigen Kunststofffolie enthalten sein, z.B. in Form einer coextrudierten Folie.

In einer bevorzugten Ausführungsform ist die EVOH-Lage aus einer mehrschichtigen Kunststofffolie gebildet, die mindestens zwei Kunststoffschichten und eine zwischen den beiden Kunststoffschichten angeordnete EVOH-Schicht umfasst. Die EVOH-Schicht ist aus EVOH gebildet, wobei gegebenenfalls übliche Additive enthalten sein können. Auf jeder der beiden Seiten der EVOH-Schicht ist jeweils mindestens eine Kunststoffschicht angeordnet, die die EVOH-Schicht schützen und/oder die Haftung in der Gasspeichermembran verbessern können. Die mehrschichtige Kunststofffolie dient in der Gasspeichermembran als Barrierefolie.

Die Kunststoffschichten in der Kunststofffolie können z.B. unabhängig voneinander aus Polyethylen (PE), Polypropylen (PP), Polyamid (PA) oder Polysulfon (PES) aufgebaut sind. Beispiele für geeignete mehrschichtige Kunststofffolien haben z.B. den folgenden Aufbau in der angegebenen Reihenfolge: PA/EVOH/PA, PE/EVOH/PP, PA/PE/EVOH/PES usw. Solche Kunststofffolien sind im Handel erhältlich.

Die ein- oder bevorzugt mehrschichtige, eine EVOH-Schicht enthaltende Kunststofffolie kann z.B. durch Aufdoublieren oder Aufheizen in die Gasspeichermembran eingebaut werden. Die ein- oder bevorzugt mehrschichtige, eine EVOH-Schicht enthaltende Kunststofffolie kann z.B. eine Dicke von 8 bis 200 µm, bevorzugt 8 bis 30 µm, aufweisen. In einer bevorzugten Ausführungsform können hochverstreckte mehrschichtige Kunststofffolien eingesetzt werden, wodurch die Barrierewirkung weiter erhöht wird.

In einer alternativen bevorzugten Ausführungsform ist die EVOH-Lage aus einem mit EVOH imprägnierten textilen Flächenkörper gebildet. Der textile Flächenkörper kann z.B. ein Vliesstoff oder Gewebe sein, wobei ein Vliesstoff bevorzugt ist. Der textile Flächenkörper kann dünn sein, da er lediglich als Träger für EVOH dient. Der textile Flächenkörper, wie ein Gewebe und insbesondere ein Vliesstoff, kann z.B. eine Dicke von 0,02 bis 0,4 mm, bevorzugt 0,05 bis 0,2 mm, aufweisen. Die Imprägnierung kann genauso wie für den Festigkeitskörper beschrieben durch Tauchen des textilen Flächenkörpers in eine EVOH-Lösung erfolgen.

In einer bevorzugten Ausführungsform ist die EVOH-Lage zwischen Elastomerlage und Festigkeitsträger oder bevorzugt zwischen zwei auf einer Seite des Festigkeitsträgers befindlichen Elastomerlagen angeordnet, wobei jeweils mindestens eine EVOH-Lage, bevorzugt eine EVOH-Lage, auf einer oder beiden Seiten des Festigkeitsträgers angeordnet sind. In der Regel ist es ausreichend, wenn mindestens eine EVOH-Lage, bevorzugt eine EVOH-Lage, auf einer Seite des Festigkeitsträgers angeordnet ist.

In einer bevorzugten Ausführungsform weisen die Komponenten bevorzugt die folgenden Flächengewichte in der Gasspeichermembran auf, wobei die Angaben unabhängig voneinander, aber auch in Kombination miteinander. Die Angaben gelten jeweils für eine Komponente, z.B. eine Elastomerlage. Wenn von einem Typ von Komponente zwei oder mehr vorhanden sind, z.B. zwei Elastomerlagen, dann weist jede davon (jede Elastomerlage) bevorzugt ein Flächengewicht in diesem Bereich auf, wobei die Flächengewichte. Die Flächengewichte der Komponenten (Elastomerlagen) können dabei gleich oder verschieden sein.

Der Festigkeitsträger weist z.B. ein Flächengewicht von 100 bis 800 g/m², bevorzugt 150 bis 600 g/m², auf. Eine gegebenenfalls vorhandene EVOH-Imprägnierung wird dabei nicht berücksichtigt (siehe unten).

Die Elastomerlage weist z.B. ein Flächengewicht von 200 bis 1000 g/m², bevorzugt 250 bis 850 g/m², auf. Die Flächengewichte der Elastomerlagen können gleich oder unterschiedlich sein, z.B. können bei zwei oder mehr Elastomerlagen auf einer Seite des Festigkeitsträger solche mit unterschiedlichen Flächengewichten eingesetzt werden.

Die EVOH-Imprägnierung, falls vorhanden, weist z.B. ein Flächengewicht von 2 bis 200 g/m², bevorzugt 10 bis 100 g/m², auf. Die EVOH-Imprägnierung bezieht sich dabei auf das EVOH-Material, das in den Festigkeitsträger imprägniert wurde.

Die EVOH-Lage, falls vorhanden, weist z.B. ein Flächengewicht von 2 bis 200 g/m², bevorzugt 10 bis 100 g/m², auf. Die Angabe bezieht sich auf die gesamte EVOH-Lage.

Die Haftgummierungsschicht, falls vorhanden, weist z.B. ein Flächengewicht von 10 bis 150 g/m², bevorzugt 20 bis 100 g/m², auf.

Das Gesamtflächengewicht der Gasspeichermembran kann z.B. im Bereich von 500 bis 5000 g/m², bevorzugt 1000 bis 3000 g/m², liegen.

Die Gasspeichermembran kann als einzelnes Element oder einzelne Bahn vorliegen. Wegen der erforderlichen Größen der im Gasspeicher verwendeten Gasspeichermembran ist es zur Herstellung gewöhnlich erforderlich, mehrere einzelne Elemente oder Bahnen einer Gasspeichermembran miteinander über eine Nahtkonstruktion zu verbinden. Zum Verbinden der einzelnen Elemente bzw. Bahnen können diese überlappend oder auf Stoß angeordnet werden und dann nach bekannten Verfahren kalt verklebt oder verschweißt werden. Die zu verbindenden Enden der Membranen können z.B. durch Aufrauen vorbehandelt und dann mit einem geeigneten Kleber bestrichen werden. Nach Vulkanisation, bevorzugt Heißvulkanisation, des Klebers sind die Einzelmembranen miteinander verbunden.

Auf diese Weise können Gasspeichermembranen hergestellt werden, die für den Einbau in einen Gasspeicher geeignet sind. Die Gasspeichermembranen können z.B. hohlzylinderartig oder torusartig oder konusartig oder in einer Kombination der genannten Formen gestaltet sein. Der Gesamtumfang der Gasspeichermembran für die Verwendung im Gasspeicher kann z.B. im Bereich von 5 bis 300 m liegen.

Die Gasspeichermembran wird insbesondere zum Abdichten eines Gasspeichers, insbesondere eines Wasserstoffgasspeichers, verwendet. Es versteht sich, dass der Gasspeicher ein Gasspeicher ist, in dem Gasspeichermembranen zur Abdichtung des Gasspeichers eingesetzt werden. Es kann sich z.B. um Gasspeicher handeln, bei denen das Gas drucklos oder mit leichtem Überdruck im Niederdruckbereich (z.B. 10 bis 50 mbar) oder Mitteldruckbereich (z.B. 50 bis 1000 mbar) gespeichert wird. Die Gasspeicher können z.B. ein Füllvolumen im Bereich von 100 bis 100.000 m³ aufweisen.

Geeignete Gasspeicher umfassen im Allgemeinen einen Mantel, z.B. einen Stahlmantel, häufig in zylindrischer Form, als Behälter, und ein bewegliches Element zur Abdeckung, z.B. eine Scheibe bzw. einen Kolben, wobei eine Membran für die Abdichtung zwischen dem beweglichen Element und dem Mantel bzw. der Wand sorgt, oder eine Membran.

Der Gasspeicher ist bevorzugt ein Doppelmembranspeicher oder ein Wiggins-Gasspeicher, insbesondere ein Wiggins-Gasspeicher. Diese Speichertypen sind dem Fachmann bekannt.

Doppelmembranspeicher weisen eine äußere Membran und eine innere bewegliche Speichermembran auf. Die vorstehend beschriebene Gasspeichermembran eignet sich insbesondere für die innere bewegliche Speichermembran.

Beim Wiggins-Gasspeicher bewegt sich ein Hubkolben bzw. eine Scheibe auf und ab, der bzw. die das Speichervolumen an die Befüllungsmenge anpasst und das Speichergas auf Betriebsdruck hält. Die Gasspeichermembran ist zwischen Speicherwand und Kolben angebracht und sorgt bei allen Bewegungszuständen für eine Abdichtung zwischen Speicherwand und Kolben.

Das Gas, welches in dem Gasspeicher gespeichert ist, kann ein beliebiges Gas sein. Es kann sich um ein Gas oder eine Mischung verschiedener Gase handeln. Es versteht sich, dass neben dem eigentlich zu speichernden Gas z.B. Fremdgase oder andere Stoffe, z.B. als Verunreinigung oder zur Stabilisierung, enthalten sein können.

Der Gasspeicher, insbesondere der Wiggins-Gasspeicher, ist bevorzugt ein Gasspeicher für Wasserstoff, Klärgas oder Biogas, d.h. ein Wasserstoffgasspeicher, ein Klärgasspeicher oder ein Biogasspeicher bzw. eine Biogasanlage, wobei der Gasspeicher bevorzugt ein Wasserstoffgasspeicher und insbesondere ein Wiggins-Gasspeicher für Wasserstoff ist.

Die Erfindung betrifft auch eine Gasspeichermembran zum Abdichten eines Gasspeichers, insbesondere eines Wasserstoffgasspeichers, wobei die Gasspeichermembran eine Lage aus einem textilen Flächenkörper als Festigkeitsträger und mindestens eine Elastomerlage aufweist, wobei die Elastomerlage aus Butylkautschuk (IIR), Chloropren-Kautschuk (CR) oder Nitrilkautschuk (NBR), bevorzugt IIR, aufgebaut ist, mit der Maßgabe, dass, wenn die mindestens eine Elastomerlage aus CR oder NBR aufgebaut ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

Alle vorstehenden Angaben zur Gasspeichermembran und dem Gasspeicher bezüglich der Verwendung gelten gleichermaßen für die beanspruchte Gasspeichermembran.

Die Erfindung betrifft auch einen Gasspeicher, insbesondere einen Wasserstoffgasspeicher, der eine Gasspeichermembran umfasst, wobei die Gasspeichermembran eine Lage aus einem textilen Flächenkörper als Festigkeitsträger und mindestens eine Elastomerlage aufweist, wobei die Elastomerlage aus Butylkautschuk (IIR), Chloropren-Kautschuk (CR) oder Nitrilkautschuk (NBR), bevorzugt IIR, aufgebaut ist, mit der Maßgabe, dass, wenn die mindestens eine Elastomerlage aus CR oder NBR aufgebaut ist und der Gasspeicher kein Wasserstoffgasspeicher ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

Alle vorstehenden Angaben zur Gasspeichermembran und dem Gasspeicher bezüglich der Verwendung gelten gleichermaßen für den beanspruchten Gasspeicher.

Der Gasspeicher ist bevorzugt ein Doppelmembranspeicher oder ein Wiggins-Gasspeicher. Der Gasspeicher ist bevorzugt ein Gasspeicher für Wasserstoff, Klärgas oder Biogas, wobei der Gasspeicher bevorzugt ein Wiggins-Gasspeicher für Wasserstoff ist.

Die Erfindung wird nun anhand von Ausführungsbeispielen unter Bezugnahme auf schematische Zeichnungen weiter erläutert.

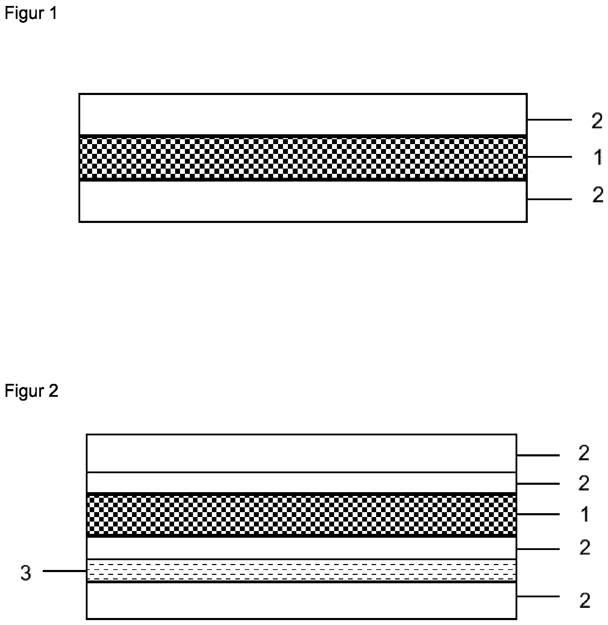

Fig. 1 zeigt einen schematischen Querschnitt durch eine erfindungsgemäße Speichermembran. Darin ist der textile Flächenkörper bzw. Festigkeitsträger 1 beidseitig jeweils mit einer Elastomerlage 2 versehen. Die beiden Elastomerlagen 2 sind mit dem Festigkeitsträger 1 über eine Haftgummierung verbunden (nicht dargestellt). Der Festigkeitsträger 1 kann z.B. ein Gewebe, z.B. ein PA-Gewebe, sein. Der Festigkeitsträger 1 kann nicht imprägniert sein oder mit EVOH imprägniert sein (nicht dargestellt). Die Elastomerlagen 2 sind jeweils eine IIR-, CR- oder NBR-Elastomerlage, wobei auf IIR aufgebaute Elastomerlagen 2 bevorzugt sind, insbesondere wenn der Festigkeitsträger 1 nicht imprägniert ist.

Der Festigkeitsträger kann ein Flächengewicht von 100 bis 800 g/m², bevorzugt 150 bis 600 g/m², aufweisen. Die Elastomerlagen 2 können jeweils ein Flächengewicht von 200 bis 1000 g/m², bevorzugt 250 bis 850 g/m², aufweisen.

Die EVOH-Imprägnierung, falls vorhanden, kann ein Flächengewicht von 2 bis 200 g/m², bevorzugt 10 bis 100 g/m², aufweisen. Die Haftgummierungsschicht kann ein Flächengewicht von 10 bis 150 g/m², bevorzugt 20 bis 100 g/m², aufweisen.

Fig. 2 zeigt einen schematischen Querschnitt durch eine andere erfindungsgemäße Speichermembran. Darin ist der textile Flächenkörper bzw. Festigkeitsträger 1 beidseitig jeweils mit 2 Elastomerlagen 2 versehen. Die beiden Elastomerlagen 2 sind mit dem Festigkeitsträger 1 über eine Haftgummierung verbunden (nicht dargestellt). Der Festigkeitsträger 1 kann z.B. ein Gelege, z.B. ein PA-Gelege, sein. Der Festigkeitsträger 1 ist nicht imprägniert. Die Elastomerlagen 2 sind jeweils eine IIR-, CR- oder NBR-Elastomerlage, wobei eine auf IIR aufgebaute Elastomerlage 2 besonders bevorzugt ist. Auf einer Seite des Festigkeitsträgers 1 ist zwischen den beiden Elastomerlagen 2 eine EVOH-Lage positioniert, z.B. eine coextrudierte Mehrschichtfolie, die eine EVOH-Schicht enthält.

Der Festigkeitsträger kann ein Flächengewicht von 100 bis 800 g/m², bevorzugt 150 bis 600 g/m², aufweisen. Die Elastomerlagen 2 können jeweils ein Flächengewicht von 200 bis 1000 g/m², bevorzugt 250 bis 850 g/m², aufweisen.

Die EVOH-Imprägnierung, falls vorhanden, kann ein Flächengewicht von 2 bis 200 g/m², bevorzugt 10 bis 100 g/m², aufweisen. Die Haftgummierungsschicht kann ein Flächengewicht von 10 bis 150 g/m², bevorzugt 20 bis 100 g/m², aufweisen.

Es werden folgende erfindungsgemäße konkrete Gasspeichermembranen bereitgestellt. Die folgenden Tabellen geben dabei die Materialien und die zugehörigen Flächengewichte an. Dabei entsprechen die eingesetzten Platten den Elastomerlagen. Die EVOH-Barriere stellt die EVOH-Lage dar.

### Beispiel 1

| Auswahl Material | g/m² |
|---|---|
| IIR-Platte | 600 |
| Folie (EVOH-Barriere) | 10-100 |
| IIR-Platte | 300 |
| IIR-Haftgummierung | 60 |
| PA-Gelege 940 dtex | 320 |
| IIR-Haftgummierung | 60 |
| IIR-Platte | 1000 |
| | 2420 g/m² |

Der Aufbau entspricht dem der Fig. 2, außer dass auf der Seite des Festigkeitsträgers, auf der keine EVOH-Lage aufgebracht ist, statt zwei Elastomerlagen eine Elastomerlage eingesetzt wird. Bei der EVOH-Barriere handelt es sich z.B. um eine mehrschichtige Kunststofffolie mit folgendem Aufbau: PA/EVOH/PA. Alternativ wären auch Aufbauten wie PE/EVOH/PP, PA/PE/EVOH/PES usw. für die Kunststofffolie denkbar wie vorstehend beschrieben.

### Vergleichsbeispiel 1

Es wurde eine Gasspeichermembran mit analogem Aufbau wie in Beispiel 1 gefertigt, außer dass statt der IIR-Platten Platten aus chlorsulfoniertem Polyethylen (CSM) und entsprechend eine CSM-Haftgummierung sowie statt der EVOH-Barriere eine Barriere aus Tetrafluorethylen-Hexafluorpropylen-Copolymer (FEP) eingesetzt wurde.

### Beispiel 2

| Auswahl Material | g/m² |
|---|---|
| IIR-Platte | 600 |
| IIR-Haftgummierung | 60 |
| PA-Gewebe 940 dtex | 410 |
| IIR-Haftgummierung | 60 |
| IIR-Platte | 600 |
| | 1730 g/m² |

Der Aufbau entspricht dem der Fig. 1 mit einem nicht imprägnierten Festigkeitsträger.

### Beispiel 3

| Auswahl Material | g/m² |
|---|---|
| IIR-Platte | 600 |
| IIR-Haftgummierung | 60 |
| EVOH-Imprägnierung | 5-50 |
| PA-Gewebe 940 dtex | 410 |
| EVOH-Imprägnierung | 5-50 |
| IIR-Haftgummierung | 60 |
| IIR-Platte | 600 |
| | 1830 g/m² |

Der Aufbau entspricht dem der Fig. 1 mit einem imprägnierten Festigkeitsträger. Das Flächengewicht der EVOH-Imprägnierung des Festigkeitsträger ist für beide Seiten gesondert aufgeführt.

### Beispiel 4

Es wurde eine Gasspeichermembran mit analogem Aufbau wie in Beispiel 2 gefertigt, außer dass statt der IIR-Platten Platten aus Chloropren-Kautschuk (CR) und entsprechend eine CR-Haftgummierung eingesetzt wurden.

### Beispiel 5

Es wurde die Wasserstoffdurchlässigkeit nach der ISO 15105-1 (70°C, 1bar,0%r.F.) an Vergleichsmaterialien und erfindungsgemäßen Gasspeichermembranen getestet.

Eine Vergleichsmembran auf Basis von PVC aus einem beidseitig mit PVC beschichteten PA-Festigkeitsträger, Flächengewicht ca. 1500 g/m², zeigte eine Wasserstoffdurchlässigkeit von ≥ 18.000 cm³/(m².d.bar) je mm Dicke. Die Wasserstoffdurchlässigkeit des erfindungsgemäßen IIR-beschichteten Gasspeicherstoffs gemäß Beispiel 2 liegt bei ca. 3000 cm³/(m².d.bar) je mm Dicke, also mind. um den Faktor 6 besser.

Wird noch vorher wie in Beispiel 3 ein Gewebe mit EVOH getaucht und mit IIR beschichtet, messen wir einen Wert von 143 cm³/(m².d.bar) je mm Dicke.

Der Aufbau gemäß Vergleichsbeispiel 1 mit dem Material CSM/FEP/CSM wird in der Technik als Chemikalienschutzanzugsstoff verwendet, da es sehr gas- und chemikalienbeständig ist. Die Wasserstoffdurchlässigkeit des Vergleichsbeispiels 1 mit FEP-Barriere betrug ca. 6000 cm³/(m².d.bar) je mm Dicke.

Die Wasserstoffdurchlässigkeit des Beispiels 4 mit reiner CR-Beschichtung betrug ca. 5000 cm³/(m².d.bar) je mm Dicke.

Es können Membranen mit dem gleichen Aufbau wie in Beispiel 3 hergestellt werden, außer dass die IIR-Platten durch CR-Platten oder NBR-Platten mit gleichen Flächengewichten ersetzt werden. Zu speichernde Gase oder Gasgemische können auch gegebenenfalls aggressive Komponenten enthalten. Eine zweckmäßige Auswahl des Elastomermaterials kann dabei eine diesbezüglich geeignete Chemikalienbeständigkeit berücksichtigen.

### Bezugszeichenliste

- 1: textiler Flächenkörper
- 2: Elastomerlage
- 3: EVOH-Lage

## Patentansprüche

1. Verwendung einer Gasspeichermembran zum Abdichten eines Gasspeichers, insbesondere eines Wasserstoffgasspeichers,
wobei die Gasspeichermembran eine Lage aus einem textilen Flächenkörper als Festigkeitsträger und mindestens eine Elastomerlage aufweist,
wobei die Elastomerlage aus Butylkautschuk (IIR), Chloropren-Kautschuk (CR) oder Nitrilkautschuk (NBR), bevorzugt IIR, aufgebaut ist,
mit der Maßgabe, dass, wenn die mindestens eine Elastomerlage aus CR oder NBR aufgebaut ist und der Gasspeicher kein Wasserstoffgasspeicher ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

2. Verwendung nach Anspruch 1, wobei der Festigkeitsträger ein Gewebe, ein Gewirke, ein Gelege oder ein Vliesstoff ist, wobei ein Gewebe, ein Gewirke oder ein Gelege bevorzugt ist.

3. Verwendung nach Anspruch 1 oder Anspruch 2, wobei, wenn die mindestens Elastomerlage aus CR oder NBR aufgebaut ist, der Festigkeitsträger mit Ethylen-Vinylalkohol-Copolymer (EVOH) imprägniert ist und/oder die Gasspeichermembran mindestens eine EVOH-Lage aufweist, die eine EVOH-Schicht oder einen mit EVOH imprägnierten textilen Flächenkörper umfasst, wobei bei einem Festigkeitsträger aus Gewebe oder Vliesstoff eine Imprägnierung mit EVOH bevorzugt ist und bei einem Festigkeitsträger aus Gelege oder Gewirke eine EVOH-Lage bevorzugt ist.

4. Verwendung nach Anspruch 1 oder Anspruch 2, wobei der Festigkeitsträger mit Ethylen-Vinylalkohol-Copolymer (EVOH) imprägniert ist und/oder die Gasspeichermembran mindestens eine EVOH-Lage aufweist, die eine EVOH-Schicht oder einen mit EVOH imprägnierten textilen Flächenkörper umfasst, wobei die mindestens Elastomerlage aus IIR aufgebaut sein kann,
wobei bei einem Festigkeitsträger aus Gewebe oder Vliesstoff eine Imprägnierung mit EVOH bevorzugt ist und bei einem Festigkeitsträger aus Gelege oder Gewirke eine EVOH-Lage bevorzugt ist.

5. Verwendung nach einem der vorhergehenden Ansprüche, wobei die Gasspeichermembran mindestens zwei Elastomerlagen aufweist, wobei auf jeder Seite des Festigkeitsträgers mindestens eine Elastomerlage angeordnet ist, z.B. eine, zwei oder mehr Elastomerlagen, wobei die Elastomerlagen bevorzugt aus dem gleichen Kautschuk aufgebaut sind.

6. Verwendung nach einem der vorhergehenden Ansprüche, wobei auf jeder Seite des Festigkeitsträgers zwischen der oder den Elastomerlagen und dem Festigkeitsträger ein Haftsystem, insbesondere eine Haftgummierung, vorgesehen ist.

7. Verwendung nach einem der vorhergehenden Ansprüche, wobei die EVOH-Lage aus einer mehrschichtigen Kunststofffolie, die mindestens zwei Kunststoffschichten und eine zwischen den beiden Kunststoffschichten angeordnete EVOH-Schicht umfasst, oder aus einem mit EVOH imprägnierten textilen Flächenkörper, insbesondere einem Vliesstoff, gebildet ist.

8. Verwendung nach einem der vorhergehenden Ansprüche, wobei jeweils mindestens eine EVOH-Lage auf einer oder beiden Seiten des Festigkeitsträgers, bevorzugt auf einer Seite des Festigkeitsträgers, zwischen Elastomerlage und Festigkeitsträger oder zwischen zwei auf einer Seite des Festigkeitsträgers befindlichen Elastomerlagen angeordnet ist.

9. Verwendung nach einem der vorhergehenden Ansprüche, wobei der Festigkeitsträger ein Flächengewicht von 100 bis 800 g/m², bevorzugt 150 bis 600 g/m², aufweist, und/oder
die Elastomerlage ein Flächengewicht von 200 bis 1000 g/m², bevorzugt 250 bis 850 g/m², aufweist, und/oder
die EVOH-Imprägnierung oder die EVOH-Lage ein Flächengewicht von 2 bis 200 g/m², bevorzugt 10 bis 100 g/m², aufweist, und/oder
die Haftgummierungsschicht ein Flächengewicht von 10 bis 150 g/m², bevorzugt 20 bis 100 g/m², aufweist.

10. Verwendung nach einem der vorhergehenden Ansprüche, wobei der Festigkeitsträger aus Polyamid (PA), Polysulfon (PES), Aramid, aromatischen Polyestern oder Kombinationen davon gebildet ist.

11. Verwendung nach einem der vorhergehenden Ansprüche, wobei der Gasspeicher ein Doppelmembranspeicher oder ein Wiggins-Gasspeicher ist, und/oder wobei der Gasspeicher ein Gasspeicher für Wasserstoff, Klärgas oder Biogas ist, wobei der Gasspeicher bevorzugt ein Wiggins-Gasspeicher für Wasserstoff ist.

12. Gasspeichermembran zum Abdichten eines Gasspeichers, insbesondere eines Wasserstoffgasspeichers,
wobei die Gasspeichermembran eine Lage aus einem textilen Flächenkörper als Festigkeitsträger und mindestens eine Elastomerlage aufweist,
wobei die Elastomerlage aus Butylkautschuk (IIR), Chloropren-Kautschuk (CR) oder Nitrilkautschuk (NBR), bevorzugt IIR, aufgebaut ist,
mit der Maßgabe, dass, wenn die mindestens eine Elastomerlage aus CR oder NBR aufgebaut ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

13. Gasspeichermembran nach Anspruch 12, wobei die Gasspeichermembran wie in einem der Ansprüche 2 bis 10 definiert ist.

14. Gasspeicher, insbesondere ein Wasserstoffgasspeicher, der eine Gasspeichermembran umfasst,
wobei die Gasspeichermembran eine Lage aus einem textilen Flächenkörper als Festigkeitsträger und mindestens eine Elastomerlage aufweist,
wobei die Elastomerlage aus Butylkautschuk (IIR), Chloropren-Kautschuk (CR) oder Nitrilkautschuk (NBR), bevorzugt IIR, aufgebaut ist,
mit der Maßgabe, dass, wenn die mindestens eine Elastomerlage aus CR oder NBR aufgebaut ist und der Gasspeicher kein Wasserstoffgasspeicher ist, der Festigkeitsträger mit Ethylen-Vinylalkohol-Copolymer (EVOH) imprägniert ist oder die Gasspeichermembran mindestens eine EVOH-Lage aufweist, die eine EVOH-Schicht oder einen mit EVOH imprägnierten textilen Flächenkörper umfasst.

15. Gasspeicher nach Anspruch 14, wobei die Gasspeichermembran wie in einem der Ansprüche 2 bis 10 definiert ist.

16. Gasspeicher nach Anspruch 14 oder Anspruch 15, wobei der Gasspeicher ein Doppelmembranspeicher oder ein Wiggins-Gasspeicher ist, und/oder wobei der Gasspeicher ein Gasspeicher für Wasserstoff, Klärgas oder Biogas ist, wobei der Gasspeicher bevorzugt ein Wiggins-Gasspeicher für Wasserstoff ist.
